# EUROPEAN PATENT APPLICATION

(11) **EP 2 081 358 A1**
(43) Date of publication of application: **22.07.2009**
(21) Application number: 08152380.5
(22) Date of filing: 06.03.2008
(51) Int. Cl.: H04L 29/06

(54) **Apparatus and associated method for providing network based address book and sharing and synchronizing address book information at multiple communication devices**

(30) Priority: 15.01.2008 US 14623
(71) Applicant: Research In Motion Limited, Waterloo, Ontario N2L 3W8 (CA)
(72) Inventor: Allen, Andrew, Mundelein, Illinois 60060 (US); Kim, Youngae, Ontario, L4W 5M4 (CA); Buckley, Adrian, Tracy, California 95376 (US); McColgan, Brian, Toronto, Ontario, M9A 2T6 (CA)
(74) Representative: Fennell, Gareth Charles

(57) **Abstract**

Apparatus, and associated methodologies for facilitating sharing and distributing contact, calendar, and scheduling information amongst communication devices. The information is distributed using presence information maintained at a presence server, thereby obviating the need for a user manually to enter the information, or changes to the information, at the different devices that are to be provided with the information.

## Description

The present disclosure relates generally to a manner by which to distribute address book information including contact, calendar, scheduling, or other information stored in the network to a plurality of communication devices, such as mobile stations of a radio communication system. More particularly, the present disclosure relates to apparatus and is associated methodologies by which to populate a network depository with the address book information, to synchronize the information between multiple devices and to share the information between users.

Presence framework is utilized by which to provide for the notification, authorization of subscription and distribution of the address book information.

### Background of the Invention

Advancements in communication technologies have permitted the development and deployment of new types of communication systems. Radio communication systems are amongst the communication systems that have made use of the technological advancements. A cellular communication system is an exemplary type of radio communication system. Successive generations of cellular communication systems have been developed and deployed, and their use through which to communicate is widespread. Development is ongoing to provide successor-generation systems that take advantage of additional advancements in technologies. New-generation systems provide, amongst other things, the capability to perform increasingly data-intensive communication services. Other advantages, many associated with the use of digital technologies, are also provided in the new-generation systems.

For instance, user equipment, i.e., mobile phones, personal digital assistants, personal computers and other communication devices regularly include address book containing contact information, scheduling information, and calendar information. Contact information includes, for instance, name information, telephone number information (E.164, national number, digit string, SIP URI, Tel URI etc), email address's (home, office, hobby etc) information, home address information, office address information, instant messaging identities (Yahoo, MSN, AOL, ICQ, Skype, Google Talk, etc), Instance ID (PIN, ESN, MAC, IMEI etc) and other types of information. The address book provides a convenient mechanism to a user of the communication device quickly to obtain contact information, scheduling information, and calendar information, typically displayable at a user display of the communication device. And, more generally, as herein described, address book information includes any of a wide variety of lifestyle information including, e.g., avatars, ringtones, weather information, webpage links, etc.

A user might well have multiple communication devices and store address book information at each of the devices. For instance, a user might have both a mobile phone and a personal computer with each of the devices having address book. When a user uses the mobile phone, the address book thereat is accessible to provide the user with information stored thereat. And, analogously, when the user uses the personal computer, the user is able to access the address book to be provided with information stored thereat. A user is typically able to modify the contents of the address book, e.g., to add a contact to a contact list, to change contact information, to add a scheduling entry, etc. A modification of the information at the address book of one of the devices must also be made at the other of the communication devices for the information to correspond.

Various synchronization mechanisms are used. Typically, synchronization is performed by interconnecting the devices and comparing the content of the respective address books of each device. Synchronization is also performable by way of radio connection between the devices. Synchronization typically requires active intervention on the part of the user to initiate the synchronization and to ensure that the synchronization is carried out properly.

A presence service is provided in various networks, typically to receive, store, and distribute presence information. In its most basic function, the presence information provides a status indicator that conveys an ability and willingness of a potential communication partner.

Presence information is provided, or published, by way of a network connection to the presence service that is stored in what, e.g., constitutes a personal availability record. The personal availability record is able to be made available for distribution to others to convey availability for communication. Presence information provided by a presence service is used, for instance, by ISPs (Internet Service Providers) (e.g. as part of various messaging services).

To date, however, presence service functionality has not been considered with respect to address book distribution and share. If a manner could be provided by which to make better use of the presence service functionality, improved communication operations and address book distribution and sharing would be possible.

It is in light of this background information related to communications by way of a communication network that the significant improvements of the present disclosure have evolved.

### Brief Description of the Drawings

Figure 1 illustrates a functional block diagram of a communication system in which an embodiment of the present disclosure is operable.

Figure 2 illustrates a functional block diagram similar to that shown in Figure 1 but representative of further operation of an embodiment of the present disclosure.

Figure 3 illustrates a message sequence diagram representative of exemplary operation of an embodiment of the present disclosure.

Figure 4 illustrates a message sequence diagram, also representative of operation of an embodiment of the present disclosure.

Figure 5 illustrates a message sequence diagram, also representative of operation of an embodiment of the present disclosure.

Figure 6 illustrates another message sequence diagram, also representative of an embodiment of the present disclosure.

### Detailed Description

The present disclosure, accordingly, advantageously provides description of apparatus, and associated methodologies by which to distribute contact, calendar, schedule or other information amongst a plurality of communication devices.

Through operation of an embodiment of the present disclosure, a manner is provided by which to populate a network depository with the address book information, to synchronize the information between multiple devices and selectably to provide access to the information to share address book information between users.

In one aspect of the present disclosure, address book information that comprises the calendar, scheduling, contact, and other information is stored in a Contact Database and populated at a Presence Server and accessible in conformity with presence access grants and permissions. The address book information is selectably provided in conformity with access permitted pursuant to the presence service to other communication devices. Address information further includes additional information, including lifestyle information, such as webpage links (e.g., My Space, Facebook, etc. links), avatars, ringtones, weather information, etc.

In another aspect of the present disclosure, a manner is provided by which to synchronize together the address book information of multiple devices used by a user. When the user adds, modifies, or deletes a contact on one of the communication devices, the change is updated on the network and then on the other devices. That is to say, when the user uses multiple devices, the address book information including contact information, the calendar information, and the scheduling information is all automatically synchronized through the network. If, for example, a user maintains an office-based device and a home-based device and address book information on the office-based device has been changed, the change has been updated in the network and then becomes synchronized with the address book of the home-based device.

In another aspect of the present information, the network-stored address book information is further accessible to devices of other users, thereby to permit sharing of the address book information of one user by others. Colleagues and friends, for example, are provided with the address book information without necessitating the first user to carry out manual procedures by which to provide the others with the information. For instance, by storing the contact information at a central network-based address book, the contact information is shared with, in a controlled manner, communication devices of other users. Through such sharing, the calendar, scheduling, or other information of a first user is accessed by other users to provide the other users with the calendar and scheduling information of the first user.

The present disclosure thereby provides a mechanism by which to use the Presence Framework to distribute address book information to other users using the Presence Information. A user can store address book information in a Contact Database that forms the basis for a central network based address book. The database is, e.g., a central database or is distributed across a number of nodes. The contacts in the Contact Database are stored, e.g., in vCard, or some other format suitable for storing contacts such as XML (or an XML representation of the vCard format) or a combination thereof to allow for extensions. The actual user's network based address book comprises URLs that reference these contacts stored in the Contact Database. A new XML schema is further defined to extend the presence PIDF to include the contacts list.

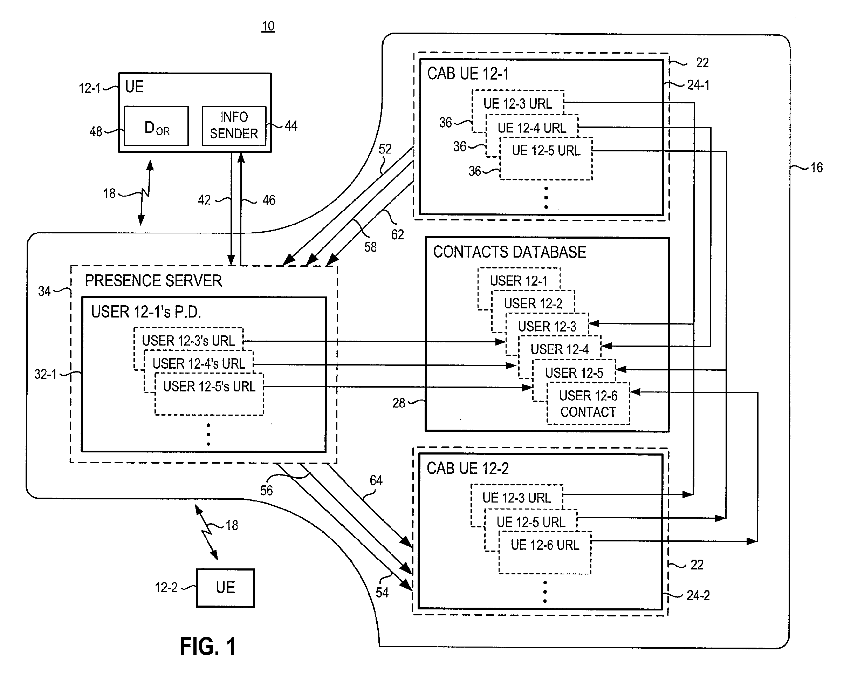

A user is able to add contacts to his CAB in the network (as URLs referencing contacts in the Contact Database) using either SIP PUBLISH, XCAP protocol, or OMA XDM mechanism as shown in the Figure 1. The user then publishes the address book information as presence information either by publishing his URLs directly from the device to the Presence Server using, e.g., SIP PUBLISH method [RFC 3903] or by publishing directly from the user's CAB Server to the Presence Server using SIP PUBLISH method. Alternatively, XCAP protocol [RFC 4827] or OMA XDM mechanism is used for the user to publish his address book information either from his device to the Presence Server or directly by publishing his address book information from the user's CAB to the Presence Server. In another implementation, the SIP Events framework [RFC 3265] using the SIP SUBSCRIBE and NOTIFY methods is instead used. The Presence Server 34 subscribes to the user's CAB Server in order to obtain his address book information. When the Presence Server gets the address book information then the Presence Server includes the URLs that reference the contacts in the Contact Database. Alternatively, the URL is included as a reference to the user's address book. However, then the user is unable to use the presence authorisation policy presence rules to provide only a subset of the contacts to another user (e.g., provide business contacts to a co-worker while keeping personal contacts private). If the Presence document contains individual URLs to each of the contacts in the Contact Database that are referenced in the User's CAB then the user can setup presence authorisation policy presence rules to provide subsets of the contacts to other users on a per user basis (e.g., provide business contacts to a co-worker while keeping personal contacts private).

Another user is then able to subscribe to the user's presence information in order to obtain the other user's address book and receive SIP NOTIFY requests containing presence information with the URLs to the contacts referenced in the CAB. The user who owns the address book is able to reuse all of the presence authorisation and presence rule mechanisms to authorise who is allowed to obtain and share the user's address book information and what contacts within the address book the user can share. Once a user has obtained the URLs for the contacts through presence subscription, the user is able to add these contacts to his CAB using either SIP PUBLISH, XCAP, or OMA XDM mechanism. Alternatively, the User's CAB subscribes directly to the other users presence information and obtain the contact information directly and upload it.

One way for a user to synchronise the contacts in the CAB to other devices is by each of the devices subscribing to the Presence Server for its own Presence Information using SIP SUBSCRIBE and NOTIFY methods to subscribe and receive notification of the contacts stored in the CAB in a manner similar to the way that other users obtain the address book information using presence mechanisms via receiving SIP NOTIFY requests containing the presence information containing the URLs to the contacts the user can synchronise each of his devices local address books to the contacts referenced in his CAB. Once the device receives the URLs, the device loads the actual contact information by subscribing directly and receiving SIP NOTIFY information to the actual contact in the Contact Database using the URLs that reference the contacts.

In order to synchronise the contacts in the CAB to other devices and obtain the contacts from the Contact Database efficiently the user, from each of the devices, subscribes using SIP SUBSCRIBE method to the CAB Server itself and the CAB Server can then subscribe to the individual contacts in the Contact Database. This way the CAB Server can subscribe using SIP SUBSCRIBE request individually to each of the contacts referenced in the CAB and aggregate the corresponding notifications so that the full contents of all the contacts in the CAB can be delivered to the user's device in a single SIP NOTIFY request. This mechanism is similar to that for resource lists used to efficiently subscribe to the presence status of multiple contacts. The SIP NOTIFY request sent to the user's device contains, e.g., the contacts themselves or URLs which reference to presence documents stored on a Presence Server that the user can then download using HTTP. Including URL references in the SIP NOTIFY request body contents is particularly useful when the address book contains a large number of contacts.

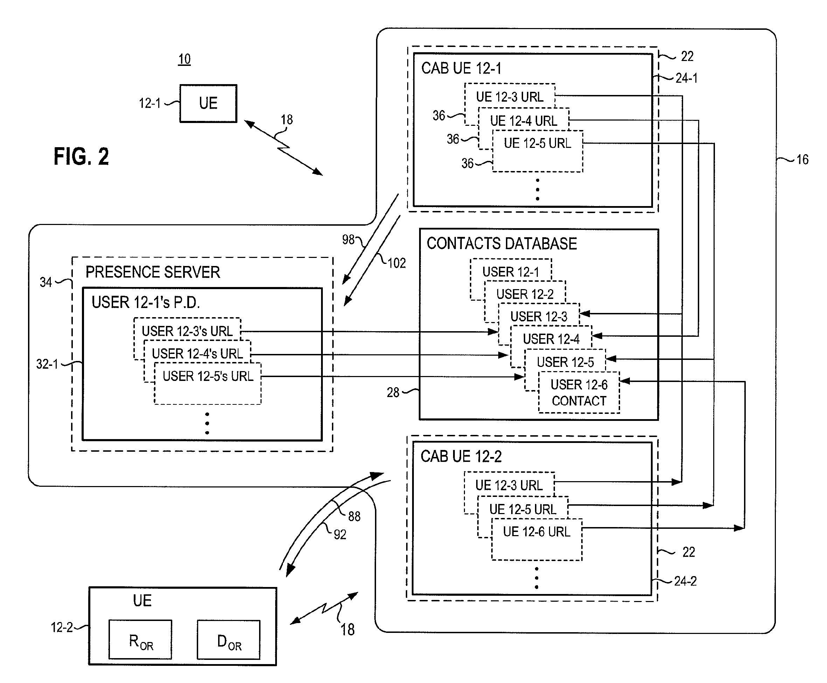

In addition to sharing contacts through subscriptions to presence information contacts can also be shared between users directly during communications or independently of communication. This can be done by including either the contact of the user directly or a URL to the user's contact in the Contact Database in a SIP INVITE used to establish a communication or in a SIP MESSAGE request sent specifically to transfer the user's contact to the another user. The user receives such a message containing another user's contact information in vCard or some other format suitable for storing contacts such as XML (or an XML representation of the vCard format). The user then uploads this to either his CAB 24-2 or into the Contact Database 28 as shown in the Figure 2 depending on whether the user would like to share this new contact with others. If the contact is a URL that references a contact in a Contact Database, then the user uploads this URL to his CAB 24-2. Uploading the URL or the actual contact to the CAB 24-2 or the contact to the Contact Database can be achieved using, e.g., the SIP PUBLISH method or XCAP using the mechanism defined in RFC 4827 or OMA XDM mechanism.

vCard contains name and address information, phone numbers, photographs, audio clips and URLs. Calendaring and Scheduling URLs are defined in [RFC 2739]. The calendaring and Scheduling URLs are, e.g., encoded within a vCard. And, vCards containing these URLs are exchangeable between users. A vCard format can be represented in XML as shown, e.g., in [http://www.xmpp.org/extensions/xep-0054.html]. A vCard of a contact directly or a URL to the user's contact in the Contact Database is included in a SIP INVITE used to establish a communication or in a SIP MESSAGE request sent specifically to transfer the user's contact information to the another user. And, the calendar/schedule information can also be exchanged. Calendar/schedule information can be made under one category which is a default Profile or multiple categories, for example, Personal Profile, Work Profile, Travel Profile, etc. The user is able to indicate one of Profiles active. The indication to make one of Profiles active can be stored in communication server, e.g. XDMS, Presence Server, Contact Database, or CAB Server using SIP protocol, XCAP protocol, OMA XDM mechanism and/or other mechanisms. Calendar/schedule information can be stored in the Contact Database, CAB Server or some other calendar/schedule management server.

Calendar sharing and scheduling enables a user to subscribe and to receive calendar information from other user's calendars as well as scheduling of various calendar events among a set of users. A SIP Event Package for calendar sharing and scheduling was proposed in [draft-niemi-sipping-cal-events-01].

Additionally a user can use Presence information to advertise calendar/schedule information similarly to the mechanisms described above with respect to contacts information to advertise the contacts in the CAB Server or Contact Database. In this case, instead of URLs that point to contacts, URLs that point to calendar/schedule information are used. Similar mechanisms as described above can be used for publishing the calendar/schedule information. A user can update the calendar/schedule information to his CAB, Contact Database or other calendar/schedule server (as URLs referencing calendar/schedule information) using either SIP Publish or XCAP protocol, OMA XDM mechanism or other mechanisms used to transport calendar/schedule information such as the iCalendar Transport-Independent Interoperability Protocol (iTIP) [RFC 2446].

The user then publishes the calendar/schedule information as presence information either by publishing his URLs to calendar/schedule information directly from his device to the Presence Server using SIP PUBLISH method [RFC 3903] or by publishing directly from his CAB in the network or other calendar/schedule server which stores calendar/schedule information to the Presence Server using SIP PUBLISH method. Alternatively, XCAP protocol [RFC 4827], OMA XDM mechanism and/or other mechanisms are used to transport calendar/schedule information. The iCalendar Transport-Independent Interoperability Protocol (iTIP) [RFC 2446] can be used, e.g., to permit the user to publish his URLs to calendar/schedule information either from his device to the Presence Server or from his CAB, Contact Database or other Calendar/schedule server which stores calendar/schedule information directly to the Presence Server. A third embodiment is to use the SIP Events framework [RFC 3265] with the SIP SUBSCRIBE and NOTIFY methods. A SIP Event Package for calendar sharing and scheduling was proposed in the just-mentioned [draft-niemi-sipping-cal-events-01]. The Presence Server can subscribe to the user's CAB or other Calendar/schedule server that contains the calendar/schedule information in order to obtain the URLs to the calendar/schedule information. When the Presence Server gets the URLs to the calendar/schedule information, then the Presence Server includes the URLs that reference calendar/schedule information.

Another user is then able to subscribe to the user's presence information in order to obtain the other user's calendar/schedule information and receive SIP NOTIFY requests containing presence information containing the URLs to the calendar/schedule information. The user who owns the calendar/schedule information can reuse all the presence authorisation and presence rule mechanisms to authorise who is allowed to obtain and share the user's calendar/schedule information and what calendars/schedules within the calendar/schedule information the user can share. Once a user has obtained the URLs for the calendar/schedule information through presence subscription he can then obtain the calendar/schedule information by subscribing to the URLs using the SIP SUBSCRIBE and NOTIFY methods, and by downloading the calendar/schedule information using XCAP/HTTP or other mechanisms used to transport schedule information such as the iCalendar Transport-Independent Interoperability Protocol (iTIP) [RFC 2446].

One way for a user to synchronise the calendar/schedule information to other devices is that by having each of the devices subscribe to the Presence Server for its own Presence Information using SIP SUBSCRIBE and NOTIFY methods to subscribe and receive notification of the URLs to calendar/schedule information similar to the way that other users can obtain the URLs to calendar/schedule information using presence mechanisms via receiving SIP NOTIFY requests containing the presence information containing the URLs to the calendar/schedule information the user synchronises each of his devices local calendar/schedule information to the calendar/schedule information in the network entity e.g. his CAB, Contact Database or other Calendar/schedule server. Once the device receives the URLs it can load the actual calendar/schedule information by subscribing directly and receiving SIP NOTIFY information to the actual calendar/schedule information using the URLs that reference the calendar/schedule information.

Other methods to synchronise the calendar/schedule information are alternatively utilized e.g., OMA Device Synchronisation or other mechanisms to transport schedule information such as the iCalendar Transport-Independent Interoperability Protocol (iTIP) [RFC 2446] or another proprietary mechanism.

Calendaring and scheduling information can be provided with URLs that point to the document containing the calendaring and scheduling information. When a user wants to receive calendaring and scheduling information from a server, the user's UE creates a SIP SUBSCRIBE request. The request identifies the resource whose calendar is requested in the Request-URI using a SIP or SIPS URI. And the server sends a SIP NOTIFY request containing the URL pointing to the requested calendaring and scheduling information. When a user wishes to schedule a calendar event with another user, the user's UE device creates a SIP PUBLISH request including by default a 'text/calendar' MIME type in the SIP PUBLISH request body. The Request-URI of the request identifies the attendee using a SIP or SIPS URI.

Four types of Calendaring and Scheduling URIs have been defined in RFC 2739, a.) a FreeBusy URI, b.) a Calendar Access URF (CAPURI), c.) a Calendar URI (CALURI), and d.) Default URIs.

The free/busy URI is defined to be a transport independent location where a client can obtain information about when a user is busy. If a calendaring and scheduling client were to retrieve data from this location using FTP or HTTP, it would get back an iCalendar object [RFC 2445] containing one or more "VFREEBUSY" calendar components. If a MIME transport is being used, the response will be contained within a "text/calendar" MIME body part as specified in the iCalendar specification [RFC 2445]. For example:

| |
|---|
| BEGIN:VCALENDAR |
| VERSION: 2.0 |
| PRODID:-//hacksw/handcal//NONSGML v1.0//EN |
| METHOD:PUBLISH |
| BEGIN: VFREEBUSY |
| ATTENDEE:MAILTO:jane_doe@host1.com |
| DTSTART: 19971013T050000Z |
| DTEND: 19971124T050000Z |
| DTSTAMP: 19970901T083000Z |
| FREEBUSY:19971015T133000Z/19971015T180000Z |
| FREEBUSY:19971015T190000Z/19971015T220000Z |
| FBURL:http://www.host.com/calendar/busy/jdoe.ifb |
| END: VFREEBUSY |
| END:VCALENDAR |

The Calendar Access URI (CAPULRI) is defined to be a protocol independent location from which a calendaring and scheduling client can communicate with a user's entire calendar. The Calendar URI (CALURI) is defined to be a protocol independent location from which a calendaring and scheduling client can retrieve an entire copy of a user's calendar. Retrieving data from this URI obtains a published "snapshot" of the user's calendar. Default URIs are also defined. In some scenarios, a user may have more than one calendar such as work calendar, personal calendar, school calendar etc. In these cases, multiple URIs, each URI pointing to a calendar or free/busy data are used.

To make the case of multiple calendars simpler for clients, the concept of the "default" calendar is sometimes used. A "default" calendar is one that a user has designated as the calendar that other users should look at when accessing the user's calendar, or retrieving the user's free/busy time.

The default calendar may, in fact, include rolled-up information from all the user's other calendars. The other calendars may only exist for organizational purposes.

The above fours types of URI may appear in the Presence document and the message bodies referred to above. Multiple URIs may also exist referencing multiple calendars. Within a vCard object, four properties are defined to represent each of the fours types of URI: CALURI", "CAPURI", "CALADRURI", and "FBURL".
The following shows an exemplary exchange of personal data using a vCard. The exemplary vCard contains a "FBURL" and a "CALURI".

| |
|---|
| BEGIN:VCARD |
| VERSION:3.0 |
| N:Dun;Alec |
| FN:Alec Dun |
| ORG:Microsoft Corporation |
| ADR;WORK;POSTAL;PARCEL:;;One Microsoft Way; |
| Redmond;WA;98052-6399;USA |
| TEL;WORK;MSG:+1-206-936-4544 |
| TEL;WORK;FAX:+1-206-936-7329 |
| EMAIL;INTERNET:user@host1.com |
| CALADRURI;PREF:mailto:user@host1.com |
| CALURI;PREF:http://cal.hostl.com/user/cal.ics |
| FBURL;PREF:http://cal.hostl.com/user/fb.ifb |
| CALURI:http://cal.company.com/projectA/pjtA.ics |
| FBURL:http://cal.company.com/projectA/pjtAfb.ifb |
| END:VCARD |

Alternatively the CAB Server itself subscribes to other users' presence information in order to receive SIP NOTIFY requests from the Presence Server containing the URL's to the contacts and then store those URLs in the user's CAB.

In the exemplary operation, a mechanism is provided by which to address a CAB Server. The mechanism includes the sending of a message from the user device to the CAB Server. This requires that the UE address the CAB Server. The address is obtained: Provisioned in internal or external memory (removable such as USIM, Compact Flash, MicroSD Card, Memory Stick etc) via OMA DM, Cell Broadcast, MBMS, SMS OTA etc., or pushed at the time of registration in 200 OK either in response to registration or in a SIP NOTIFY.

Instead of being provided with the address of the CAB Server by a mechanism similar to that described above, the address of the CAB Server could be constructed as a URI parameter or Constructed URI parameter or constructed by appending a TAG to Public User ID being used, e.g., CABTAG.name@domain.com or name@cabtag.domain.com.

### Format of UE information

FQDN
OMA DM
/<X>/ CAB SERVER
   - Occurrence: ZeroOrOne
   - Format: chr
   - Access Types: Get, Replace
   - Values: <A fully qualified domain name>

The FQDN, or host name as defined by RFC 1123 [8], is represented as character-labels with dots as delimiters.

### EXAMPLE: pcscf.operator.com

<Node>
<NodeName> CAB SERVER</NodeName>
<DFProperties>
<AccessType>
<Get/>
<Replace/>
</AccessType>
<DFFormat>
<chr/>
</DFFormat>
<Occurrence>
<ZeroOrOne/>
</Occurrence>
<Scope>
<Dynamic/>
</Scope>
<DFTitle> CAB SERVER.</DFTitle>
<DFType>
<MIME>text/plain</MIME>
</DFType>
</DFProperties>
</Node>

Various mechanisms are available by which to synchronize a CAB Server. For example, when a UE registers with a network, a token within the registration identifies that the UE supports the CAB Server. The token is a media feature tag in the Contact Header. Third party registration is performed (maybe due to initial Filter Criteria) to CAB server. The CAB Server subscribes to REG Event package to obtain all the public user IDs that have been registered and checks them against its user database, formatted as follows:
Public User ID
Address Book information
Address Information
URL to other address information

Figure 1 shows procedures to populate address book information in Presence Server. A communication system 10 includes communication devices of which the communication device 12-1, here referred to as a UE (User Equipment), is representative. The UE is implementable in any desired manner to provide any of various functionalities including, here, management of a database having address book information, i.e., contact information, scheduling information, calendar information, and other information. The other information includes any desired information, such as avatars, ringtones, weather information, and other information. The communication device comprises, for instance, a mobile station, a personal digital assistant, or a personal computer. In other implementations, the UE is constructed in other manners and provides other functionalities, in addition to functionalities related to the address book information.

The communication system 10 includes a network part 16 having elements (not separately shown) capable of sending and receiving signals communicated between the network 16 and the UE 12 by way of channels defined upon a radio air interface 18.

The network part 16 consists of CAB (Common Address Book) Server 22, Contact Database 28, and Presence Server 34. A CAB Server 22 contains UEs' CABs, for example CAB 24-1 and CAB 24-2 respectively associated with UE 12-1 and UE 12-2 in the Figure 1. And a Presence Server 34 contains presence documents of UEs. The presence document of UE 12-1 is contained in 32-1 of the Presence Server 34 in the Figure 1. The elements are functionally represented, physically implemented in any desired manner, including, for instance, by algorithms executable by processing circuitry, mass storage devices having mass storage capabilities, etc. And the elements are further logically represented, physically implemented in any desired manner, either at single physical locations or distributed amongst more than one location.

The CAB 24-1 is a CAB associated with the UE 12-1. The CAB 24-1 includes entries, of which exemplary entries 36 are representative. The entries include URLs or actual addresses of contacts. Other information is analogously storable at the CAB. Analogously, other CABs are associated with other UEs. The CAB 24-2, e.g., is associated with a second UE, identified as UE 12-2.

According to one embodiment of the present disclosure, a mechanism is provided by which to populate the presence document 32-1 at the Presence Server with address book information, e.g., contact (office contact information [SIP URI, Tel URI, E.164 number, email etc], home contact information [SIP URI, Tel URI" E.164 email etc], hobby contact information [SIP URI, Tel URI, E.164 number, email etc] , calendar, and scheduling information etc. In one implementation, and as indicated by the segment 42, an information sender 44 of the UE 12-1 sends a SIP PUBLISH request to the Presence Server 34 containing URLs to contact information and/or the URLs to calendar/schedule information. The address of the CAB Server 22 is, e.g., provisioned internally in memory, internal or external (e.g. Compact Flash, MicroSD, R-UIM, (U)SIM, Memory Stick etc), at the time of manufacture, OMA DM, or pushed at the time of the registration of the UE, e.g., as part of a SIP 200 OK message or via SMS / USSD OTA. When the Presence Server receives the SIP PUBLISH request, the Presence Server 34 includes the URLs to contact information and/or the URLs to calendar/schedule information in the presence document 32-1, and the Presence Server sends a SIP 200 OK response 46 to the UE 12-1 for detection by a Detector (D_{OR}) 48.

The segments 42 and 46 are also representative of an alternate implementation in which the UE 12-1 sends an HTTP PUT request to the Presence Server that contains the URLs to contact information and/or URLs to calendar/schedule information. This signaling utilizes, e.g., the mechanism defined in RFC 4827. When the Presence Server receives the HTTP PUT request, the Presence Server includes the URLs to contact information and the URLs to calendar/schedule information in the presence document 32-1 and returns an HTTP 200 OK response to the UE 12-1.

In another implementation, and as indicated by the segments 52 and 54, the CAB Server 22 sends a SIP PUBLISH method 52 that contains the URLs to contacts information and/or the URLs to calendar/schedule information to the Presence Server. When the Presence Server receives the SIP PUBLISH method, the Presence Server includes the URLs to contact information and the URLs to calendar/schedule information in the presence document 32-1 in a SIP 200 OK response and sends the SIP 200 OK response 54 to the CAB Server 22.

Analogously, the segments 52 and 54 are also representative of an alternate representation in which an HTTP PUT request and an HTTP 200 OK response are exchanged. That is to say, the CAB Server 22 sends an HTTP PUT message that contains the URLs to contacts information and the URLs to calendar/schedule information to the Presence Server. Signaling is performed pursuant, e.g., the mechanism defined in RFC 4827. And, when the Presence Server receives the HTTP PUT message, the Presence Server includes the URLs to contact information and the URL to calendar/schedule information in the presence document 32-1 in a HTTP 200 OK response and sends the HTTP 200 OK response, indicated by the segment 54, to the CAB Server 22.

In another implementation, the Presence Server sends a SIP SUBSCRIBE method, indicated by the segment 56, to the CAB Server in order to obtain the URLs to contacts information and the URLs to calendar/schedule information that is stored at the CAB Server. And, as indicated by the segment 58, the CAB Server 22 receives the SIP SUBSCRIBE method, and returns an SIP 200 OK response to the Presence Server. Then, as indicated by the segments 62, the CAB Server sends an SIP NOTIFY method that contains the URLs to contacts information and the URLs to calendar/schedule information to the Presence Server. The segment 64 is representative of an SIP 200 OK response returned by the Presence Server to the CAB Server 22.

Figure 2 shows procedure to share address book information between users. It also illustrates the communication system 10, showing UEs, 12-1 and 12-2, a communication network 16, and the elements therein. Here, a mechanism is shown, by which to facilitate sharing of information. Here, information associated with the UE 12-1 is available to be distributed to, or provided to, i.e., shared, with another UE, here the UE 12-2. A message receiver (R_{OR}) 78 and a Detector (D_{OR}) 80 are shown to form part of the UE12-2 to provide for message receiver and detection signaling, noted as follows. First, the UE 12-1 sends a SIP INVITE request to the UE 12-2 to establish a session. The SIP INVITE request contains, in its body, a URL to the contact information of the UE 12-1. The UE 12-2 indicates to a user thereof that the first UE has provided the contact information and offers the possibility to upload the contact information to the CAB 24-2. If selection is made by a user of the UE 12-2 to include the contact information in the CAB 24-2 associated with the UE 12-2, the UE 12-2 populates his CAB 24-2 by sending an SIP PUBLISH method containing the URL to the contact information, indicated by the segment 88, to the CAB Server 22 at which the CAB 24-2 is embodied. The SIP PUBLISH method contains the URL to the contact information. When the CAB Server 22 receives the SIP PUBLISH method, the CAB Server 22 includes the URL to the contact information in the CAB 24-2 and sends, indicated by the segment 92, an SIP 200 OK response to the UE 12-2.

In an alternate implementation, a SIP INVITE request is sent to the UE 12-2 by the UE 12-1 to establish a session. The SIP INVITE request contains, in its body, a URL to the contact information of the UE 12-1. Once received, the UE 12-2 indicates to its user that the UE 12-1 has provided contact information, and offers the possibility to upload the contact information to the CAB 24-2. If the user of the UE 12-2 selects the inclusion of the contact information in the CAB 24-2, the UE 12-2 populates the CAB 24-2 by sending an HTTP PUT request containing the URL to the contact information, indicated by the segment 98, to the CAB Server 22 at which the CAB 24-2 is embodied. Upon receiving the HTTP PUT request the CAB Server 22 includes the URL to the contact information in the CAB 24-2 and sends an HTTP 200 OK response, indicated by the segment 102, to the UE 12-2.

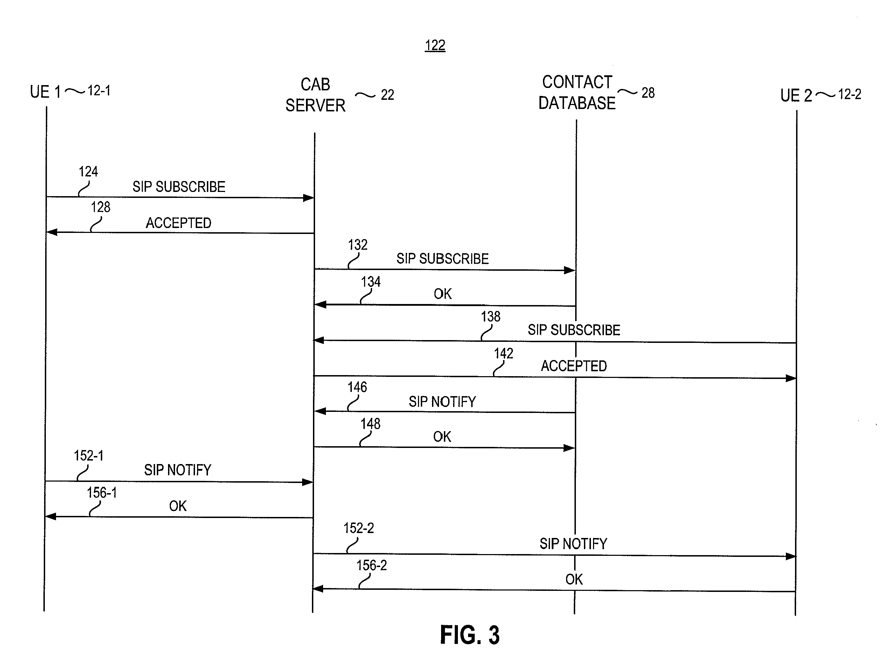

Figure 3 illustrates a message sequence diagram, shown generally at 122, that is representative of signaling generated during operation of an embodiment of the present disclosure by which to synchronize address book information between multiple devices used by a user, such as the UEs 12-1 and 12-2 shown in Figures 1 and Figure 2.

First, and as indicated by the segment 124, the UE 12-1 sends a SIP SUBSCRIBE method to the CAB Server 22. The SIP SUBSCRIBE method is sent in order to obtain URLs to contacts and the URL to calendar/schedule information stored at the CAB 24-1. The CAB Server 22 needs to ensure that the contact subscribing to the information is authorized to do so based upon the authenticated user identity of the subscribing user being the owner of the address book. When the CAB Server receives the SIP SUBSCRIBE method 124, the CAB Server sends a SIP 202 ACCEPTED message, indicated by the segment 128, if the UE 12-1 is allowed to subscribe to the information.

The CAB Server 22 sends, indicated by the segment 132, a SIP SUBSCRIBE message to the Contact Database 28 in order to obtain contacts and calendar/schedule information stored at the Contact Database. When the Contact Database receives the SIP SUBSCRIBE message, the Contact Database sends, indicated by the segment 134, a SIP 200 OK response to the CAB Server.

The second UE, the UE 12-2 sends, indicated by the segment 138, a SIP SUBSCRIBE message to the CAB Server 22 in order to obtain URLs to contacts and the URL to calendar/schedule information stored at the CAB Server 22. The CAB Server 22 sends, indicated by segment 142, a SIP 202 ACCEPTED message to the UE 12-2 in response to the subscribed message 138.

The Contact Database 28 sends, indicated by segment 146, a SIP NOTIFY message to the CAB Server containing contacts and calendar/schedule information. The CAB Server 22 sends, indicated by the segment 148, a SIP 200 OK response to the Contact Database 28 responsive to reception by the server of the SIP NOTIFY method. The CAB Server 22 sends, indicated by the segment 152, a SIP NOTIFY method to both UE 12-1 and UE 12-2. The SIP NOTIFY method contains contacts and calendar/schedule information. In a scenario in which multiple SIP SUBSCRIBE methods are sent to multiple Contact Databases, the CAB Server waits and aggregates the contents of the SIP NOTIFY requests from the multiple Contact Databases into a single SIP NOTIFY request to the UEs.

SIP 200 OK messages 156 are sent by the UEs 12-1 and 12-2 to the CAB Server 22.

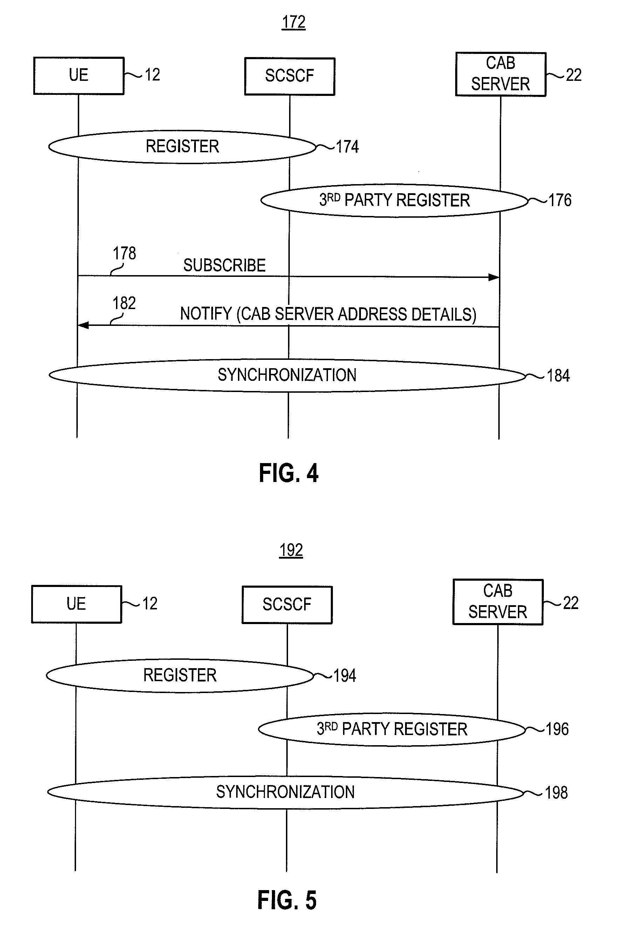

Figure 4 illustrates a sequence diagram, shown generally at 172, representative of exemplary signaling pursuant to synchronization, here by UE subscription to a CAB Service. Registration of a UE 12 with an S-CSCF is indicated by the block 174, and third-party registration is represented by the block 176. The segment 178 is representative of a subscription message sent by the UE to the CAB Server 22 to subscribe to the CAB service. And, the CAB Server sends, indicated by the segment 182, a SIP NOTIFY message. The SIP NOTIFY message includes an XML of the location of the CAB Server and information, e.g., per RFC 4483, of configuration necessary to allow the UE 12 to contact. Here UE 12 is provided with a URL of a location where the UE obtains the necessary information for the device to synchronize with the CAB Server 22. And, as indicated by the block 184, synchronization is performed.

Figure 5 illustrates a sequence diagram, shown generally at 192, representative of signaling generated pursuant to an alternative manner by which to provide for synchronization between a UE 12 and the CAB Server 22. Here, UE 12 has configuration information stored thereat, e.g., in an internal memory or in a removable memory, such as a compact flash, an SD memory card, etc. The configuration information comprises, for instance, FQDN information. Registration of a UE 12 with an S-CSCF is indicated by the block 194, and third-party registration is represented by the block 196. Synchronization, indicated by the block 198 is then performed.

A mechanism is further provided by which to make changes to address book information.

If the UE has already subscribed to the CAB service, it will receive a SIP NOTIFY that the address book has updated, the UE will then perform a sync per the above procedures. Alternatively the UE will be continuously in contact with the CAB Server via the SYNC protocol, any changes are made automatically.

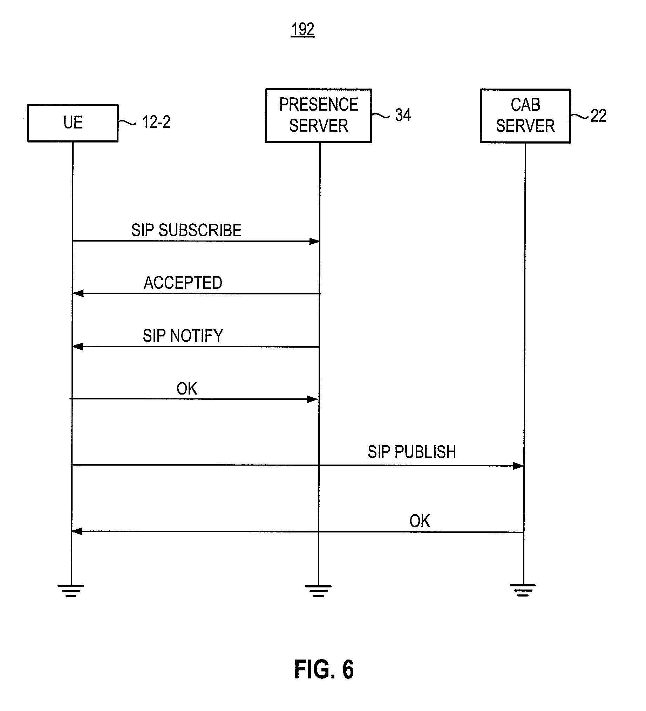

Figure 6 illustrates a sequence diagram representative of signaling generated pursuant to an alternative manner by which to share address book information between users. In a first exemplary procedure, a second UE 12-2, sends SIP SUBSCRIBE message to the Presence Server 34 which has UE 12-1's presence information in order to obtain the URLs to the contacts and the URLs to the calendar/schedule information stored in the CAB 24-1.

When Presence Server 34 receives SIP SUBSCRIBE method the Presence Server 34 authorizes the UE 12-2 and, if successfully authorized, sends SIP 202 ACCEPTED to the UE 12-2.

Then, the Presence Sever 34 sends a SIP NOTIFY message to UE 12-2 containing the URLs to the contacts and the URLs to calendar/schedule information. When UE 12-2 receives a SIP NOTIFY message, UE 12-2 includes the URLs to the contacts and the URL to the calendar/schedule information in the local address book and sends SIP 200 OK response to Presence Server 34.

UE 12-2 populates its CAB24-2 by sending a SIP PUBLISH message to CAB Server 22 containing the URLs to the contacts and the URLs to calendar/schedule information.

When the CAB Server 22 receives a SIP PUBLISH message, the CAB Server 22 includes the URLs to the contacts and the URLs to calendar/schedule information in the CAB 24-2 and sends SIP 200 OK response to the UE 12-2.

In another exemplary procedure, the UE 12-2 sends a SIP SUBSCRIBE method to the Presence Server 34 which has the UE12-2's presence information in order to obtain the URLs to the contacts and the URLs to the calendar/schedule information stored in the CAB 24-1. When Presence Server 34 receives the SIP SUBSCRIBE message the Presence Server 34 authorizes UE 12-2 and, if successfully authorized, sends SIP 202 ACCEPTED to the UE 12-2. The Presence Sever 34 sends a SIP NOTIFY message to the UE 12-2 containing the URLs to the contacts and the URLs to the calendar/schedule information.

When the UE 12-2 receives the SIP NOTIFY message the UE 12-2 includes the URLs to the contacts and the URL to the calendar/schedule information in the local address book and sends SIP 200 OK response to Presence Server 34. The UE 12-2 populates the CAB 24-2 by sending the CAB Server 22 an HTTP PUT request containing the URLs to the contacts and the URLs to the calendar/schedule information using the mechanism defined in RFC 4827.

When the CAB Server 22 receives the HTTP PUT request, the CAB Server 22 includes the URLs to the contacts and the URLs to the calendar/schedule information in the CAB 24-2 and sends HTTP 200 OK to the UE 12-2.

In another implementation, CAB Server 22 sends a SIP SUBSCRIBE message to the Presence Server 34 which has the UE 12-1's presence information in order to obtain the URLs to the contacts and the URLs to the calendar/schedule information stored in the CAB 24-1. When Presence Server 34 receives the SIP SUBSCRIBE message the Presence Server 34 authorizes the User 12-2 and sends SIP 202 ACCEPTED to CAB Server 22. Presence Sever 34 sends a SIP NOTIFY message to CAB Server 22 containing the URLs to the contacts and the URLs to the calendar/schedule information.

When CAB Server 22 receives a SIP NOTIFY message the CAB Server 22 includes the URLs to the contacts and the URLs to the calendar/schedule information in the CAB 24-2 and sends SIP 200 OK response to the Presence Server 34.

Presently preferred embodiments of the disclosure and many of its improvements and advantages have been described with a degree of particularity. The description is of preferred examples of implementing the disclosure, and the description of preferred examples is not necessarily intended to limit the scope of the disclosure. The scope of the disclosure is defined by the following claims.

## Claims

1. An apparatus for a first UE, User Equipment, for facilitating sharing of first-UE-stored information, said apparatus comprising:
an information sender configured to send a presence-server-terminated message that contains the fist-UE-stored information, the first-UE-stored information, once presence-server-terminated, selectably accessible; and
a detector configured to detect a message response responsive t the presence-server-terminated message.

2. The apparatus of claim 1 wherein said information sender is configured to send a SIP PUBLISH message.

3. The apparatus of claim 1 wherein said information sender is configured to send an HTTP PUT message that contains the first UE store information.

4. The apparatus of claim 1 wherein said information sender is configured to indirectly send the presence-server-terminated message to be presence-server-terminated via an indirect route.

5. The apparatus of claim 4 wherein the indirect route comprises a common address book route.

6. The apparatus of claim 1 wherein the first-UE-stored information comprises first-UE-stored contact information and wherein said information sender is configured to send a presence-server-terminated message that contains the first-UE-stored contact information.

7. The apparatus of claim 1 wherein the first-UE-stored information comprises first-UE-stored calendar information and wherein said information sender is configured to send a presence-server-terminated message that contains the first-UE-stored calendar information.

8. The apparatus of claim 1 wherein the first-UE-stored information comprises first-UE-stored schedule information and wherein said information sender is configured to send a presence-server-terminated message that contains the first-UE-stored contact information.

9. The apparatus of claim 1 wherein said detector is configured to detect at least one of: a 200 SIP OK and an HTTP 200 OK.

10. An apparatus for a first UE, User Equipment, for using presence-server-terminated information, said apparatus comprising:
an information requestor configured to generate an information request message to request presence-server-stored information; and
a detector configured to detect a response to the information request message.

11. The apparatus of claim 10 wherein said information requestor is configured to generate a SIP SUBSCRIBE message to request the presence-server-stored information.

12. The apparatus of claim 10 wherein said detector is configured to detect a SIP NOTIFY message responsive to the -information request.

13. Apparatus for a communication network, said apparatus comprising:
a storage element configured to store data related to first user equipment information, the data including at least identification of direction information that identifies a storage; and
an accessor configured selectably to permit access to the first user equipment information responsive to request therefor.

14. The apparatus of claim 13 wherein said storage element is configured to store the data related to the first user equipment information as presence information.

15. The apparatus of claim 13 wherein said accessor is configured to permit access to the first user equipment information in conformity with presence information.

16. A method for facilitating synchronization of user-equipment information between a plurality of User Equipments, UEs, said method comprising:
detecting first-user-equipment-generated information;
storing the fist-user-equipment generated information together with first user equipment presence information;
synchronizing a UE of the stored plurality using first-user-equipment generated information if permitted access thereto; and
selectably permitting access to the fist-user-equipment generated information in conformity with accessibility defined by the first user equipment presence information.

17. The method of claim 16 wherein said detecting comprises detecting an URL, Uniform Resource Locator, that references a contact database.

18. The method of claim 16 further comprising selecting whether to permit the UE of the plurality to access the first-user-equipment generated information.

19. The method of claim 18 wherein said selecting is made in conformity with presence information.

20. The method of claim 16 wherein said synchronizing comprises providing the first-user-equipment generated information to the UE of the plurality

## Amended claims

### Amended claims in accordance with Rule 137(2) EPC.

**1.** An apparatus for a first-user User Equipment "UE" for facilitating sharing of second-user address-book information, said apparatus comprising:
a first-message generator configured to generate a first message (FIG. 6, SIP SUBSCRIBE) to subscribe to a user presence service;
a detector configured to detect notification (FIG. 6, SIP NOTIFY) of second-user address-book-related information responsive to the first message, in conformity with a second-user presence authorization policy; and,
a second-message generator configured to generate a second message (FIG. 6, SIP PUBLISH) to obtain the second-user address-book information utilizing the notification detected by said message detector.

**2.** The apparatus of claim 1, wherein said first message generator is configured to send a SIP SUBSCRIBE message.

**3.** The apparatus of claim 1, wherein said first message generator is configured to send an HTTP PUT message.

**4.** The apparatus of claim 1, wherein said second message generator is configured to generate a SIP PUBLISH message.

**5.** The apparatus of claim 1, wherein the notification detected by said detector comprises a SIP NOTIFY message.

**6.** The apparatus of claim 5, wherein the SIP NOTIFY message comprises a Uniform Resource Locator "URL" that identifies a location of the first user address book information.

**7.** The apparatus of claim 1, wherein said detector is further configured to receive (152-2) the first user address book information.

**8.** The apparatus of claim 1, wherein the first user address book information is received as part of a SIP NOTIFY message (152-2) that contains the first-UE-stored contact information.

**9.** The apparatus of claim 1, wherein the second message comprises an XCAP message.

**10.** A method for facilitating sharing by a first user of second-user address-book information, said method comprising:
generating a first message (FIG. 6, SIP SUBSCRIBE) to subscribe to a user presence service;
detecting notification (FIG. 6, SIP NOTIFY) of authorized second-user address-book-related information responsive to the first message, in conformity with a second-user presence authorization policy; and,
generating a second message (FIG. 6, SIP PUBLISH) to obtain the second-user address-book information.

**11.** The method of claim 10, wherein said generating the first message comprises generating a SIP SUBSCRIBE message.

**12.** The method of claim 10, wherein said detecting comprises detecting a SIP NOTIFY message.

**13.** Apparatus for a communication network, said apparatus comprising:
a storage element configured to form a contacts database (28) to store first-user address-book information; and,
a presence entity (34) configured to distribute first-user address-book-related information (32-1) in conformity with a first-user presence authorization policy, the first-user address-book-related information identifying how to access the first-user address-book information stored at said contact database (28).

**14.** The apparatus of claim 13, wherein said contacts database (28) comprises a first-user-associated database (24-1).

**15.** The apparatus of claim 13, wherein said presence entity (34) comprises a presence server.

**16.** A method for facilitating distribution of address book information, said method comprising:
detecting first-user-equipment-generated address-book information (42);
storing the first-user-equipment-generated address-book information at a contacts database (28); and,
providing for distribution of first-user-equipment address-book-related information in conformity with a first-user presence authorization policy, the first-user-equipment-generated address-book-related information identifying how to access the first user-equipment-generated address-book information (32-1) stored during said storing.

**17.** The method of claim 16, wherein said detecting comprises detecting a Uniform Resource Locator "URL".

**18.** The method of claim 16, further comprising selecting whether to permit-access the first user equipment address book related information.

**19.** The method of claim 18, wherein the first user presence authorization policy comprises a first user-defined policy.

**20.** The method of claim 16, wherein said providing for distribution further comprises:
identifying a Uniform Resource Locator "URL" that indicates where the first address book information is stored.
